Europäisches Patentamt

European Patent Office

Office européen des brevets

(19)

(11) Veröffentlichungsnummer: **0 247 287**
**A1**

(12) # EUROPÄISCHE PATENTANMELDUNG

(21) Anmeldenummer: **87102345.3**

(22) Anmeldetag: **19.02.87**

(51) Int. Cl.⁴: **A 01 N 25/00**, A 01 N 37/10, C 11 D 3/48

(30) Priorität: **19.02.86 DE 3605287**

(43) Veröffentlichungstag der Anmeldung: **02.12.87**
Patentblatt 87/49

(84) Benannte Vertragsstaaten: **AT BE CH DE ES FR GB IT LI LU NL SE**

(71) Anmelder: **Werner & Mertz GmbH, Ingelheimstrasse 1-3, D-6500 Mainz 1 (DE)**

(72) Erfinder: **Bischoff, Edelbert, Dr., Leibnizstrasse 52, D-6719 Kirchheim-Bolanden (DE)**
Erfinder: **Wetter, Gert, Im Alten Rathaus, Wörrstadt-Rommersheim (DE)**

(74) Vertreter: **Zumstein, Fritz jun., Dr. et al, Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

(54) **Mittel zur Bekämpfung von Hausstaubmilben zusammen mit anderen Kleinschädlingen und/oder Pilzen.**

(57) Die Erfindung betrifft ein Mittel zur Abtötung von Hausstaubmilben auf der Basis einer überwiegend wäßrigen Trägerflüssigkeit sowie dessen Verwendung, wobei gleichzeitig auch andere Kleinschädlinge und/oder Pilze bekämpft werden.

EP 0 247 287 A1

BEZEICHNUNG GEÄNDERT
siehe Titelseite

0247287

WERNER & MERTZ GMBH, D-6500 Mainz

Mittel zur Bekämpfung von Hausstaubmilben zusammen mit anderen Kleinschädlingen und/oder Pilzen sowie dessen Verwendung

In der älteren Anmeldung EP 85110440.6 wird ein Mittel zur Bekämpfung (Abtötung) von Hausstaubmilben beschrieben, mit dem es zum ersten Mal möglich ist, diese Schädlinge und die mit ihnen verbundenen Probleme im Haushalt zu bekämpfen. Zur Erläuterung der zu überwindenden Schwierigkeiten wird in vollem Umfang auf die Ausführungen in der genannten älteren Anmeldung in den Kapiteln "technischer Hintergrund" und "bisheriger Stand der Technik" Bezug genommen. Sie sind auch Bestandteil der vorliegenden Beschreibung. Die vorliegende Anmeldung geht von der Beschreibung und den Beispielen der genannten älteren Anmeldung aus und erweitert nun die Wirkstoffkomponente.

Gegenstand der vorliegenden Erfindung

Es hat sich nämlich gezeigt, daß es bei der Bekämpfung von Hausstaubmilben wünschenswert sein kann, (mit ein und demselben Mittel) auch gleichzeitig noch andere im Haus auftretende Kleinschädlinge und/oder Pilze zu erfassen. Diesem Zweck dient nun die vorliegende Weiterbildung des Gegenstands der genannten älteren Anmeldung.

Sämtliche, in der älteren Anmeldung erörterten Probleme sowohl hinsichtlich der Formulierungstechnik, als auch hinsichtlich der Heranführung des akariziden Wirkstoffs an die Milben und ferner das zusätzliche Ziel der Erfassung auch
anderer im Haus auftretender Kleinschädlinge und/oder Pilze werden nun durch den Gegenstand der vorliegenden Anmeldung gelöst, nämlich durch ein Mittel, wie es in dem beigefügten Patentanspruch 1 gekennzeichnet ist und das eine
Wirkstoffkombination von einem akariziden Wirkstoff mit
einem insektiziden Wirkstoff und/oder mit einem fungiziden Wirkstoff enthält.

Durch ein derart erfindungsgemäß gekennzeichnetes Mittel
und seine weiteren Ausgestaltungen gemäß den beigefügten
Unteransprüchen, wird unter anderem sichergestellt, daß
eine verstärkte Wiederanschmutzung (durch ein "Kleben"
der akariziden Wirkstoffe) vermieden wird, und daß der
nach dem Antrocknen bzw. Aufbringen resultierende pulverförmige Rückstand nicht nur von seiner Teilchengröße her
für die orale Aufnahme durch die Milben geeignet ist, sondern von ihnen auch als Futter angenommen wird.

Die Wirkung auf die Milben wird durch die genannten insektiziden Wirkstoffe und/oder durch die genannten fungiziden
Wirkstoffe nicht nur ergänzt bzw. erweitert, sondern darüber
hinaus vielfach verstärkt.

Nachstehend wird das erfindungsgemäße Mittel, seine weiteren Ausgestaltungen sowie seine Anwendung im einzelnen erläutert.

Bevorzugt ist die Trägerflüssigkeit im erfindungsgemäßen
Mittel (im Falle eines flüssigen oder schaumförmigen Reinigungsmittels) Wasser oder (im Falle eines pulverförmigen
Reinigungsmittels) überwiegend wäßrig, d.h. sie enthält
mindestens 50 Gew.-% Wasser.

Als akarizider Wirkstoff (nachstehend Komponente A.1.)
können hochsiedende Ester, insbesondere Benzoesäurebenzylester, Salicylsäurebenzylester, Benzoesäurephenylester, Salicylsäurephenylester, Piperonylisobutyrat, sowie gemischte und einfache Phthalsäureester, wie z.B. Phthalsäuredimethylester, -diethylester, -dibutylester, -dioctylester, -diisodecanylester, -diallylester oder -benzylbutylester, verwendet werden. Es versteht sich von selbst, daß der akarizide Wirkstoff jeweils eine für den Menschen verträgliche Substanz sein muß. Die Menge des im erfindungsgemäßen Mittel vorhandenen akariziden Wirkstoffs kann variieren. Im allgemeinen beträgt sie 1 bis 20 Gewichtsprozent, bezogen auf die erfindungsgemäße Zusammensetzung. Dabei ist ein Mengenbereich von 1 bis 6 Gewichtsprozent bevorzugt. Besonders bewährt hat sich ein Mengenbereich von 2 bis 6 Gewichtsprozent.

Die zusätzlich vorhandenen insektiziden Wirkstoffe (nachstehend Komponente A.2.) sind insbesondere auf der Basis der bekannten und üblichen Pyrethrine oder Pyrethrum-Derivate aufgebaut. Diese Wirkstoffe können natürlicher und/oder synthetischer Herkunft sein.Zur ersten Gruppe gehören z.B. Pyrethrum-Konzentrate natürlicher Herkunft (Pyrethrum-Board of Kenia etc.); zur zweiten Gruppe gehören z.B. Resmethrin, Bioresmethrin, Permethrin. Diese Stoffe können ferner gegebenenfalls zusammen mit hierfür bekannten und üblichen Synergisten vorliegen (z.B. Piperonylbutoxid). Im Hinblick auf den bestimmungsgemäßen Verwendungszweck (im Hausbereich; durch Laien; auch auf Betten) ergibt sich, daß es sich bei dem zusätzlich vorhandenen insektiziden Wirkstoff - ebenso wie bei dem akariziden Wirkstoff - um für den Menschen physiologisch verträgliche Substanzen handelt.

Die Menge des im erfindungsgemäßen Mittel vorhandenen insektiziden Wirkstoffs kann variieren. Im allgemeinen beträgt sie 1 bis 20 Gewichtsprozent, bezogen auf die erfindungsgemäße Zusammensetzung. Dabei ist ein Mengenbereich
von 1 bis 6 Gewichtsprozent bevorzugt.

Ein bevorzugtes Mengenverhältnis zwischen dem akariziden
Wirkstoff und den Pyrethroiden (insektizidem Wirkstoff) beträgt 1:4 bis 4:1, wenn die Wirkstoffkombination aus A.1.
und A.2. gebildet ist.

Als fungizide Wirkstoffe (nachstehend Komponente A.3.) für
das erfindungsgemäße Mittel sind beispielsweise folgende
bekannten und hierfür üblichen Verbindungen zu nennen:
organische Säuren (z.B. Sorbinsäure, Benzoesäure, Ameisensäure, Propionsäure) und ihre Salze; Ester dieser Säuren
(z.B. p-Hydroxybenzoesäureester, wie der Methyl-, Ethyl-
und Propylester, sowie zugehörige Salze); Thiabendazol
oder Antibiotika (wie z.B. Pimaricin, Rimocidin, Nystatin, Natamycin, Amphotericin A und B, Aktidion).

Auch hier versteht sich, daß es sich bei den fungiziden
Wirkstoffen in Anbetracht ihrer bestimmungsgemäßen Verwendung im Hausbereich um für den Menschen physiologisch
verträgliche Substanzen handelt.

Die Menge des im erfindungsgemäßen Mittel vorhandenen
fungiziden Wirkstoffs kann variieren. Im allgemeinen beträgt sie 0,1 bis 10 Gewichtsprozent, bezogen auf die erfindungsgemäße Zusammensetzung. Dabei ist ein Mengenbereich
von 0,3 bis 5 Gewichtsprozent bevorzugt.
Wenn die Wirkstoffkombination aus A.1. und A.3. gebildet
ist, . beträgt ein bevorzugtes Mengenverhältnis zwischen
akarizidem Wirkstoff und fungizidem Wirkstoff 1:4 bis 4:1.

Bei dem erfindungsgemäß vorhandenen flüssigen, schaumförmigen oder pulverförmigen Reinigungsmittel für textile Innenausstattungsflächen, mit Wasser als überwiegender Trägerflüssigkeit, handelt es sich jeweils um eine besonders abgestimmte Rezeptformulierung, um die in der oben genannten älteren Anmeldung erläuterten Erfordernisse zu erfüllen und gleichzeitig nach dem Antrocknen bzw. Aufbringen
den gewünschten pulverförmigen Rückstand mit der geeigneten mittleren Teilchengröße zu ergeben.

Diese mittlere Teilchengröße des pulverförmigen Rückstands
nach dem Antrocknen bzw. Aufbringen beträgt im allgemeinen
2 bis 100 µm. Dabei ist besonders ein Größenbereich von 10
bis 50 µm bevorzugt.

Zwecks Erzielung des gewünschten pulverförmigen Rückstands
basiert die erfindungsgemäß besondere Rezeptformulierung
im wesentlichen auf folgenden Komponenten:

A.1. akarizider Wirkstoff: 1 bis 20 Gewichtsprozent, insbesondere 1 bis 6 Gewichtsprozent.

A.2. insektizider Wirkstoff: 1 bis 20 Gewichtsprozent, insbesondere 1 bis 6 Gewichtsprozent.

A.3. fungizider Wirkstoff: 0,1 bis 10 Gewichtsprozent, insbesondere 0,3 bis 5 Gewichtsprozent.

Bei gleichzeitigem Vorhandensein von A.1. und A.2. und A.3.
ist das Mengenverhältnis von akarizidem Wirkstoff/insektizidem Wirkstoff/fungizidem Wirkstoff bevorzugt 1:4:4 bis
4:1:1.

B. Wasser:
bei flüssigem Reinigungsmittel 10 bis 90 Gew.-%, insbesondere 40 bis 70 Gew.-%;
bei schaumförmigem Reinigungsmittel 10 bis 90 Gew.-%, bevorzugt 60 bis 90 Gew.-%, insbesondere 70 bis 90 Gew.-%;
bei pulverförmigem Reinigungsmittel 5 bis 60 Gew.-%, insbesondere 10 bis 30 Gew.-%.

C. gelöster bzw. dispergierter Kunststoff:

bei flüssigem Reinigungsmittel 5 bis 90 Gew.-%, insbesondere 20 bis 60 Gew.-%;
bei schaumförmigem Reinigungsmittel 1 bis 80 Gew.-%, insbesondere 5 bis 10 Gew.-%.

Anorganischer oder organischer Feststoff:

bei flüssigem Reinigungsmittel, nur gegebenenfalls, 0,5 bis 20 Gew.-%;
bei schaumförmigem Reinigungsmittel 0,5 bis 20 Gew.-%, insbesondere 1 bis 5 Gew.-%;
bei pulverförmigem Reinigungsmittel 20 bis 80 Gew.-%, insbesondere 30 bis 70 Gew.-%.

D. Tenside:

bei flüssigem und schaumförmigem Reinigungsmittel 0,05 bis 10 Gew.-%,insbesondere 2 bis 5 Gew.-%;
bei pulverförmigem Reinigungsmittel 0,05 bis 10 Gew.-%, insbesondere 0,05 bis 1 Gew.-%.

E. Entschäumer:

bei flüssigem Reinigungsmittel 0,2 bis 5 Gew.-%, insbesondere 0,3 bis 1 Gew.-%;

und gegebenenfalls F. fakultativen Zusätzen, wie Parfüm (insbesondere 0,2 Gew.-%); Konservierungsmittel (insbesondere 0,2 Gew.-%); Verdickungsmittel (insbesondere 0,1 bis 2 Gew.-%).

Als Fettschmutz-lösender Bestandteil ist bei einem pulverförmigen Reinigungsmittel bevorzugt noch z.B. Testbenzin in einer Menge von 1 bis 30 Gew.-%, insbesondere 5 bis 20 Gew.-%, vorhanden. Als Treibmittel ist bei einem schaumförmigen Reinigungsmittel bevorzugt z.B. Propan/Butan in
einer Menge von 5 bis 20 Gew.-%, insbesondere 7 bis 13
Gew.-%, vorhanden.

Für die obengenannte Komponente C sind als Beispiele zu
nennen: gelöste organische oder anorganische Polymere,
wie Xanthan-Gummi oder Wasserglas; Acrylate aus wäßrigen
Acrylatdispersionen; inerte Materialien, wie Silikate,
z.B. Montmorillonit, amorphes Siliciumdioxid, $SiO_2$ in
Form von Quarzsand oder Kieselerde, oder Carbonate, z.B.
gefällte oder gemahlene mineralische Kreide; oberflächenreiche Substanzen, wie Cellulosepulver, gemahlene Kunststoffschäume (z.B. aus Harnstoff-Formaldehyd-Harz), Kunststoffpulver (z.B. aus Polyamid, Polyurethan oder Polyethylen), Mehle aus Holz oder Maiskolben, nicht-quellbare Stärke. Ferner sind noch zu nennen: Natrium-Aluminium-Silikate
(Molekularsieb-Typen), Poliertonerde, Aluminiumoxid, Borax;
sowie organische makromolekulare Produkte, z.B. Polystyrol-,
Polypropylen- und Polyvinylharze. Dabei ist es erfindungsgemäß möglich, daß in der Rezeptformulierung eine oder mehrere dieser Komponenten C vorhanden sind.

Im einzelnen dienen diese Zusätze C dazu, daß nach dem Antrocknen bzw. Aufbringen des erfindungsgemäßen Mittels ein
pulverförmiger Rückstand resultiert, in dem die Wirkstoffkomponente in fester Form (inkludiert, absorbiert oder adsorbiert) vorliegt, und zwar in der anspruchsgemäßen mittleren Teilchengröße, die von dem Kleinschädling, insbesondere der Hausstaubmilbe, aufgenommen werden kann. Damit
wird, falls erwünscht, auch das Pilzwachstum nach Kontakt
mit dem erfindungsgemäßen Mittel (in Form einer Flüssigkeit,
eines Schaums oder eines Pulvers) verhindert bzw. bekämpft.

Mit ihrer Fähigkeit, einen pulverförmigen Rückstand (zusam-

men mit der Wirkstoffkomponente) zu bilden, unterscheidet sich die erfindungsgemäß vorhandene Komponente C deutlich von den Filmbildnern bisher bekannter Reinigungsmittel für textile Unterlagen; bei solchen bekannten, z.B. flüssigen Reinigungsmitteln, ist es gerade erwünscht, daß der Trockenrückstand einen Film ausbildet, d.h. daß er die Textilfaser mit einem schmutzabweisenden Überzug versieht. Eine solche Filmbildung ist im Falle des Anmeldungsgegenstands dagegen nicht erwünscht, weil der dabei auf der Textilfaser anhaftende akarizide Wirkstoff für die orale Aufnahme durch die Milben nicht mehr zur Verfügung stünde. Weiterhin unterscheidet sich das erfindungsgemäße Mittel von der Kategorie solcher bekannten Textilreinigungsmittel, bei denen der Trockenrückstand möglichst leicht absaugbare Festkörper bildet (bei diesen bekannten Reinigungsmitteln sind deshalb größere, dem Luftstrom mehr ausgesetzte, flockenartige Teilchen gerade erwünscht); dagegen soll im Falle des Anmeldungsgegenstands die mittlere Teilchengröße des pulverförmigen Rückstands eine gewisse Grenze nicht überschreiten, weil sonst die Milben nicht in der Lage sind, ihn zu fressen. Andererseits soll auch ein zu großer Anteil von sehr feinen Teilchen vermieden werden, weil sonst die Tendenz einer zu starken Adhäsion der Partikel an den Textilfasern und damit zur Aufhellung, z.B. dunkelgefärbter Gewebe, besteht.

Als für die besondere Rezeptformulierung in Frage kommende Tenside (Komponente D) sind die auf dem Gebiet der textilen Reinigungsmittel bekannten und üblichen anionaktiven, nicht ionogenen, kationaktiven oder amphoteren Stoffe zu nennen. Als anionische Tensid-Beispiele sind zu nennen: sulfonierte aromatische Kohlenwasserstoffe, z.B. n-Alkyl-benzolsulfonat; sulfonierte aliphatische Kohlenwasserstof-fe, z.B. sekundäres Alkansulfonat; sulfoniertes Alpha-Olefin, z.B. Olefinsulfonat; sulfatierter Fettalkohol, z.B. Natriumlaurylsulfat; sulfatierter Fettalkoholether, z.B. Natriumlaurylpolyglykolethersulfat; sulfonierte Fettsäuremethylester, z.B. Palmkernsulfofettsäuremethylester; sulfonierte Maleinsäureester, z.B. Laurylsulfosuccinat; carboxymethylierte Fettalkoholpolyglykolether, z.B. Laurylpolyglykoletheracetat. Als nichtionische Tensid-Beispiele sind zu nennen: Fettalkoholethoxylat, Alkylphenolethoxylat, Fettsäureethoxylat, Fettsäurealkylolamid, Fettsäurealkylolamidethoxylat, Fettaminethoxylat, Polyalkylenoxid-Blockpolymerisate. Als kationische Tenside sind quaternäre Ammoniumverbindungen zu nennen. Beispiele für Ampholyte sind Betaine.

Der in der Rezeptformulierung vorhandene Entschäumer (Komponente E) kann ebenfalls üblicher Art sein. Besonders bevorzugt sind dabei Fettsäuren, z.B. im Handel befindliche Gemische von $C_{12}$-$C_{18}$-Fettsäuren in Form ihrer Natriumsalze (Seifen). Bezüglich der entschäumenden Wirkung von Seifen vgl. Helmut Stache, Tensid-Taschenbuch, München-Wien (1979), Seite 201.

Je nachdem, ob das erfindungsgemäß vorhandene Reinigungsmittel in Form einer Flüssigkeit oder schaumförmig oder pulverförmig vorliegt, sind für den Einzelfall noch folgende Erläuterungen angebracht:

1. Flüssiges Reinigungsmittel

Bei der Immersion in die Flüssigkeit, d.h. bei dermalem Kontakt, werden bereits Milben und andere Kleinschädlinge abgetötet. Gleichzeitig bewirkt der nach dem Antrocknen der Flüssigkeit resultierende pulverförmige Rückstand mit der entsprechenden mittleren Teilchengröße, daß er von den Schädlingen auch oral aufgenommen wird und daß er auch auf diese Weise wirkt. Dabei werden auch solche Milben erfaßt, die von der Flüssigkeit selbst nicht benetzt wurden
bzw. die aus nicht behandelten Bereichen nach dem Antrocknen der Flüssigkeit zuwandern.

## 2. Schaumförmiges Reinigungsmittel

Es gelten hier ähnliche Gesichtspunkte wie vorstehend unter
1 beschrieben, jedoch ist es in diesem Falle nicht beabsichtigt, eine weitgehende Benetzung der zu behandelnden
Gegenstände durchzuführen; eine Immersion ist also nur im
oberflächlichen Bereich möglich.

Das Mittel wirkt hier hauptsächlich nach dem Antrocknen
über den pulverförmigen Rückstand mit der Teilchengröße,
die oral aufgenommen werden kann. Der pulverförmige Rückstand dringt in tieferliegende Bereiche und wird dort von
den Schädlingen aufgenommen.

## 3. Pulverförmiges Reinigungsmittel

Bei dieser Ausführungsform soll eine starke Durchfeuchtung
von vornherein vermieden werden. Dadurch wird eine möglichst baldige Wiederbenutzung sowie die Schonung empfindlicher Gewebe erzielt. Die Wirkung beruht in diesem Falle
nur auf der oralen Einnahme.

Besonders bewährt haben sich erfindungsgemäße Mittel der
folgenden Zusammensetzung:

## I) Teppichreiniger (pulverförmig)

| | Gew.-% | | | | Gew.-% | |
|---|---|---|---|---|---|---|
| Cellulose-Pulver | 20 | bis 80 | vorzugsweise | 30 | bis 70 |
| Wasser | 5 | bis 60 | " | 10 | bis 30 |
| Testbenzin | 0 | bis 30 | " | 5 | bis 20 |
| Alkohol | 0 | bis 10 | " | 1 | bis 6 |
| Wirkstoffkombination (akarizider Wirkstoff zusammen mit insektizidem und/oder fungizidem Wirkstoff) | 1 | bis 20 | " | 4 | bis 12 |
| Tensid | 0,05 | bis 5 | " | 0,05 | bis 1 |
| Parfüm | 0,2 | | | | |
| Konservierungsmittel | 0,2 | | | | |

## II) Teppichreiniger (flüssig)

| | Gew.-% | | | | Gew.-% | |
|---|---|---|---|---|---|---|
| Wasser | 10 | bis 90 | vorzugsweise | 40 | bis 70 |
| Seife (Entschäumer) | 0,5 | bis 5 | " | 0,5 | bis 1 |
| Tensid | 1 | bis 10 | " | 2 | bis 5 |
| Wirkstoffkombination (akarizider Wirkstoff zusammen mit insektizidem und/oder fungizidem Wirkstoff) | 1 | bis 20 | " | 4 | bis 12 |
| Polymer 40 %-ig | 5 | bis 90 | " | 20 | bis 60 |
| Parfüm | 0,2 | | | | |
| Konservierungsmittel | 0,2 | | | | |

## III) Polster- und Matratzen-Reiniger (schaumförmig)

| | Gew.-% | | | | Gew.-% | |
|---|---|---|---|---|---|---|
| Wasser | 60 | bis 90 | vorzugsweise | 70 | bis 90 |
| Tensid | 0,5 | bis 10 | " | 2 | bis 4 |
| Wirkstoffkombination (akarizider Wirkstoff zusammen mit insektizidem und/oder fungizidem Wirkstoff) | 0,5 | bis 20 | " | 2 | bis 12 |
| Cellulose | 0,5 | bis 20 | " | 1 | bis 5 |

| Verdickungsmittel | 0,1 | bis | 2 | vorzugsweise | 0,2 | bis | 0,3 |
|---|---|---|---|---|---|---|---|
| Treibmittel | 5 | bis | 20 | " | 7 | bis | 13 |
| Parfüm | 0,2 | | | | | | |
| Konservierungsmittel | 0,2 | | | | | | |

IV) <u>Polster- und Matratzenreiniger (schaumförmig)</u>

| | Gew.-% | | | | Gew.-% | | |
|---|---|---|---|---|---|---|---|
| Wasser | 10 | bis | 90 | vorzugsweise | 70 | bis | 90 |
| Tensid | 0,5 | bis | 10 | " | 2 | bis | 4 |
| Wirkstoffkombination (akarizider Wirkstoff zusammen mit insektizidem und/oder fungizidem Wirkstoff) | 0,5 | bis | 20 | " | 2 | bis | 12 |
| Polymer 40 %-ig | 1 | bis | 80 | " | 5 | bis | 10 |
| Treibmittel | 5 | bis | 20 | " | 7 | bis | 13 |
| Parfüm | 0,2 | | | | | | |
| Konservierungsmittel | 0,2 | | | | | | |

Die mit dem erfindungsgemäßen Mittel zu behandelnden Innenausstattungsflächen sind diejenigen Bereiche, auf denen das Vorkommen von Hausstaubmilben, anderen Kleinschädlingen und/ oder Pilzen festgestellt wurde. Dies sind insbesondere textile Materialien, aber auch andere Innenausstattungsflächen. Dabei können die Fasern der Textilunterlage sowohl natürlichen als auch synthetischen Ursprungs sein.

Als andere zu bekämpfende Kleinschädlinge (außer Hausstaubmilben) sind beispielsweise Flöhe, Staubläuse, Spinnentiere (Zecken), Schaben, Silberfischchen u. dgl. zu nennen. Zu ihrer Bekämpfung ist in dem erfindungsgemäßen Mittel eine Wirkstoffkombination aus akariziden und insektiziden Komponenten vorhanden.

Damit lassen sich neben Hausstaubmilben gleichzeitig auch andere im Hausbereich auftretende Kleinschädlinge bekämpfen.

0247287

Gegenstand der vorliegenden Anmeldung ist deshalb auch die bestimmungsgemäße Verwendung des Mittels zur gleichzeitigen Bekämpfung von Hausstaubmilben und anderen Kleinschädlingen, insbesondere den oben genannten Kleinschädlingen.

Die mit dem erfindungsgemäßen Mittel zu bekämpfenden Pilze können unter dem Sammelbegriff "xerophile Pilze" zusammengefaßt werden, d.h. es handelt sich um Pilze, die - im Vergleich zu den sonstigen Pilzarten - mit etwas niedrigeren relativen Luftfeuchtigkeiten auskommen. Auch diese Pilze erzeugen Allergene, die zusammen mit den Allergenen der Hausstaubmilben im Hausstaub vorkommen. Xerophile Pilze spielen insbesondere in solchen Landschaftsregionen eine Rolle, wo während längerer Perioden des Jahres eine hohe Luftfeuchtigkeit herrscht (beispielsweise Niederlande, norddeutsches Tiefland, aber auch feuchte Täler in der Nähe von Flüssen und Seen, auch innerhalb von Gebirgsgegenden). Es erweist sich deshalb vielfach als vorteilhaft, die Bekämpfung der Hausstaubmilben mit derjenigen der xerophilen Pilze zu verbinden. Spezielle xerophile Pilze, die bekämpft werden können, sind z.B. Aspergillus restrictus, Aspergillus penicilloidae, Aspergillus glaucus, Aspergillus halophilicus, Aspergillus candidus, Aspergillus versicolor, Wallemia sebi.

Aufgrund der zusätzlichen Anwesenheit des fungiziden Wirkstoffs ist Gegenstand der Anmeldung auch die Verwendung des Mittels zur gleichzeitigen Bekämpfung von Hausstaubmilben und Pilzen, insbesondere den oben genannten Pilzen.

Wie oben angegeben, können in dem Mittel gemäß vorliegender Anmeldung (außer dem akariziden Wirkstoff) zusätzlich gleichzeitig der insektizide Wirkstoff und der fungizide Wirkstoff vorhanden sein. Durch seine Anwendung lassen sich dann gleichzeitig Hausstaubmilben, Kleinschädlinge und Pilze bekämpfen.

Wie in der oben genannten älteren Anmeldung bereits erläutert, versteht sich, daß das anmeldungsgemäße Mittel im gesamten Haushalt, z.B. durch Laien, zur Anwendung gelangt, wobei diese Anwendung im Rahmen der normalen Reinigungsoperationen erfolgt. Das beinhaltet natürlich z.B. bei der Flüssigformulierung, daß sie mit Hilfe von Auftragsgeräten oder Sprühvorrichtungen aufgebracht wird, daß sie dort antrocknet und daß durch das Absaugen sowie durch das spätere Begehen eine mechanische Nachbearbeitung der Trockenrückstände erfolgt.

Ebenso beinhaltet dies, z.B. bei den schaumförmigen Formulierungen, selbstverständlich, daß sie nach ihrer Auftragung (als Schaum) dann mechanisch eingearbeitet werden.

Die Anwendung des erfindungsgemäßen Mittels auf Matratzen oder Polstermöbel erfolgt zweckmäßig in der Weise, daß nach dem Auftrocknen des schaumförmigen Reinigers die Partikel etwa 1 bis 2 cm in die Tiefe eindringen.

Wegen des erwünschten längeren Einwirkungszeitraums der Wirkkomponente auf die jeweiligen Flächen bzw. Gegenstände, der sich über einen Zeitraum von Wochen bis Monaten erstreckt, ist es bisweilen zweckmäßig, die Behandlung mit dem erfindungsgemäßen Mittel ein- bis zweimal zu wiederholen. Auf diese Weise werden die jeweiligen Schädlingspopulationen in effizienter Weise erfaßt.

Die folgenden Beispiele erläutern die Erfindung, ohne ihre Anwendung zu beschränken.

Beispiel 1

Reiniger (flüssig)

| | |
|---|---:|
| Wasser, dest. | 62,48 % |
| Entschäumer ($C_{12}$-$C_{18}$-Fettsäure und Natronlauge, 45 %-ig) | 0,7 |
| Triethanolamin | 2,00 |
| Tensidgemisch (Natriumlaurylether-sulfat, Alkylphenolethoxylate) | 4,62 |
| Benzylbenzoat | 4,00 |
| Pyrethrum (konz. nat.) | 4,00 |
| Pimaricin | 2,00 |
| Polyacrylat, 40 %-ig | 20,00 |
| Konservierungsmittel | 0,20 |
| | 100,00 % |

Beispiel 2

Polster- und Matratzenreiniger (schaumförmig)

| | |
|---|---:|
| Wasser, dest. | 84,3 % |
| Tensidgemisch (Natriumlaurylsul-fat, Alkensulfonat, Hydroxyalkan-sulfonat, Seife) | 3,4 |
| Benzylbenzoat | 2,00 |
| Pyrethrum (konz. nat.) | 1,00 |
| Cellulose | 2,00 |
| organisches Polymer (Xanthangummi) | 0,30 |
| Propan/Butan | 7,0 |
| | 100,00 % |

B e i s p i e l  3

Polster- und Matratzenreiniger (schaumförmig)

| | |
|---|---|
| Wasser, dest. | 73,2 % |
| Tensidgemisch (wie Beispiel 2) | 2,8 |
| Benzylbenzoat | 2,00 |
| Pimaricin | 1,00 |
| Polyacrylat, 40 %-ig | 8,0 |
| Propan/Butan | 13,0 |
| | 100,00 % |

B e i s p i e l  4

Textilreiniger (pulverförmig)

| | |
|---|---|
| Cellulosepulver | 30,0 % |
| Kristallquarzsand | 30,0 |
| Natriumchlorid | 2,0 |
| Testbenzin | 12,0 |
| Wasser, dest. | 15,8 |
| Konservierungsmittel | 0,20 |
| $SiO_2$ (Diatomeenerde) | 5,00 |
| Benzylbenzoat | 3,00 |
| Pyrethrum synth. (z.B. Resmethrin) | 1,0 |
| Piperonylbutoxid | 0,5 |
| Natamycin | 0,5 |
| | 100,00 % |

Patentansprüche

1.        Mittel zur Bekämpfung von Hausstaubmilben,
das auch andere im Haus auftretende Kleinschädlinge und/oder
Pilze erfaßt, bestehend aus

I.   einer Wirkstoffkombination
     (a) eines akariziden Wirkstoffs mit einem insektiziden
         Wirkstoff oder
     (b) eines akariziden Wirkstoffs mit einem fungiziden
         Wirkstoff oder
     (c) eines akariziden  Wirkstoffs mit einem insektiziden Wirkstoff und einem fungiziden Wirkstoff
     und
II.  einem flüssigen, schaumförmigen oder pulverförmigen
     Reinigungsmittel für textile Innenausstattungsflächen mit Wasser als überwiegender Trägerflüssigkeit,

wobei sein (nach dem Antrocknen bzw. Aufbringen) pulverförmiger Rückstand eine mittlere Teilchengröße aufweist, die
für eine orale Aufnahme durch die Hausstaubmilben geeignet
ist.


2.        Mittel nach Anspruch 1, dadurch gekennzeichnet, daß der pulverförmige Rückstand eine mittlere Teilchengröße von 2 bis 100 µm aufweist.


3.        Mittel nach Anspruch 1, dadurch gekennzeichnet, daß die Kombination der Wirkstoffe mit dem Reinigungsmittel so abgestimmt ist, daß der resultierende pulverförmige Rückstand, ohne die Hausstaubmilben abzuweisen, als
Futter aufgenommen wird.

4. Mittel nach Anspruch 1, dadurch gekennzeichnet, daß der akarizide Wirkstoff ein hochsiedender Ester, ausgewählt aus der Gruppe Benzoesäurebenzylester, Salicylsäurebenzylester, Benzoesäurephenylester, Salicylsäurephenylester, Piperonylisobutyrat, und gemischte und einfache Phthalsäureester, wie z.B. Phthalsäuredimethylester, -diethylester, -dibutylester, -dioctylester, -diisodecanylester, -diallylester oder -benzylbutylester, ist.

5. Mittel nach Anspruch 1, dadurch gekennzeichnet, daß es frei von Polyalkylenglykolen, deren Äthern sowie Estern, sowie frei von Fettsäureestern ist.

6. Mittel nach Anspruch 1, dadurch gekennzeichnet, daß der insektizide Wirkstoff ausgewählt ist aus Insektiziden auf Basis von Pyrethrinen oder Pyrethrum-Derivaten, gegebenenfalls zusammen mit üblichen Synergisten.

7. Mittel nach Anspruch 1, dadurch gekennzeichnet, daß der fungizide Wirkstoff ausgewählt ist aus Fungiziden auf der Basis von organischen Säuren, Thiabendazol oder Antibiotika.

8. Mittel nach Anspruch 1, dadurch gekennzeichnet, daß es für die Erzielung des pulverförmigen Rückstands wäßrige Kunststoffdispersionen oder -lösungen enthält, die nach dem Antrocknen eine mittlere Teilchengröße von 2 bis 100 µm ergeben.

9. Mittel nach Anspruch 1, dadurch gekennzeichnet, daß es zur Erzielung des pulverförmigen Rückstands anorganische oder organische Feststoffpulver enthält.

10. Mittel nach Anspruch 8 oder 9, dadurch gekennzeichnet, daß die Dispersionen, Lösungen oder Feststoffpulver die geeignete mittlere Teilchengröße haben, oder
diese nach dem Antrocknen bzw. Aufbringen ausbilden.

11.    Mittel nach Anspruch 1, dadurch gekennzeichnet, daß es zur Erzielung des pulverförmigen Rückstands
mit geeigneter mittlerer Teilchengröße eine oder mehrere Komponenten gemäß den Ansprüchen 8 und 9 enthält.

12.    Verwendung des Mittels gemäß Anspruch 1 zur
Bekämpfung von Hausstaubmilben zusammen mit anderen im
Haus auftretenden Kleinschädlingen und/oder Pilzen auf
Innenausstattungsflächen.

13.    Verwendung des Mittels gemäß Anspruch 1 zur
Bekämpfung von Hausstaubmilben zusammen mit anderen im
Haus auftretenden Kleinschädlingen und/oder Pilzen auf
textilen Innenausstattungsflächen.

0247287
Nummer der Anmeldung

**Europäisches Patentamt**

# EUROPÄISCHER RECHERCHENBERICHT

EP 87 10 2345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 630 919 (V. SHEAFFER) <br><br> * Ansprüche; Spalte 4, Zeilen 74-75; Spalte 7, Zeilen 13-19 * | 1,2,4-6,9-13 | A 01 N 25/00 <br> A 01 N 37/10 <br> C 11 D 3/48 |
| Y | CHEMICAL ABSTRACTS, Band 103, Nr. 5, 5. August 1985, Seite 160, Zusammenfassung Nr. 33508v, Columbus, Ohio, US; & JP-A-60 42 314 (EARTH CHEMICAL CO. LTD) 06-03-1985 <br> * Zusammenfassung * | 1,2,4-6,9-13 | |
| P,Y | EP-A-0 017 315 (MORGAN-WARD CRITCHLEY & CO. LTD) <br> * Ansprüche; Seite 7, Zeilen 3-6; Seite 5, Zeilen 5-15 * | 1,2,4,5,7,8 | |
| Y | FR-A-2 443 501 (AIRWICK AG) <br><br> * Ansprüche 1,4; Seite 11, Zeilen 17-26; Seite 15, Zeilen 20-25 * | 1,2,4,5,7,8 | RECHERCHIERTE SACHGEBIETE (Int. Cl. 3) <br><br> C 11 D 3/00 |
| Y | CHEMICAL ABSTRACTS, Band 101, Nr. 14, Oktober 1984, Seite 100, Zusammenfassung Nr. 112809f, Columbus, Ohio, US; ZA-A-83 02 947 (IMMUNOCHEM RESEARCH (PTY.) LTD) 28-03-1984 <br> * Zusammenfassung * | 1,2,8 | |
| | --- -/- | | |

Der vorliegende Recherchenbericht wurde für alle Patentansprüche erstellt.

| Recherchenort <br> DEN HAAG | Abschlußdatum der Recherche <br> 10-09-1987 | Prüfer <br> PFANNENSTEIN H.F. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | EP-A-0 031 455 (STERLING DRUG INC.) * Seite 9, Zeilen 6-14; Ansprüche 1,4,5 * | 1,2,4 | |
| D,A | GB-A-1 368 657 (ROBERTS LABORATORIES LTD) * Ansprüche 1,8 * | 1,4 | |
| D,P | EP-A-0 173 229 (WERNER & MERTZ GmbH) * Insgesamt * | 1-5 | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 10-09-1987 | Prüfer PFANNENSTEIN H.F. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82